# EUROPÄISCHE PATENTSCHRIFT

(11) **EP 3 186 711 B1**
(45) Veröffentlichungstag und Bekanntmachung des Hinweises auf die Patenterteilung: **24.02.2021**
(21) Anmeldenummer: 15753073.4
(22) Anmeldetag: 25.08.2015
(51) Int. Cl.: G06F 12/02, G06F 12/04

(54) **SPEICHERVERWALTUNG FÜR EINEN TOKEN**
MEMORY MANAGEMENT FOR A TOKEN
GESTION DE MÉMOIRE POUR JETON D'AUTHENTIFICATION

(30) Priorität: 29.08.2014 DE 102014112496
(43) Veröffentlichungstag der Anmeldung: 05.07.2017
(73) Patentinhaber: Bundesdruckerei GmbH, 10969 Berlin (DE)
(72) Erfinder: SCHOLZE, Steffen, 13469 Berlin (DE); SCHWAN, Matthias, 10437 Berlin (DE); MÜLLER, Frank, 10407 Berlin (DE); HESSE, Danny, 10785 Berlin (DE); WIRTH, Klaus-Dieter, 12683 Berlin (DE); FILZHUTH, Elke, 12359 Berlin (DE)
(74) Vertreter: Richardt Patentanwälte PartG mbB
(86) Internationale Anmeldenummer: PCT/EP2015/069449
(87) Internationale Veröffentlichungsnummer: WO 2016/030376

(56) Entgegenhaltungen:
- US-A- 5 742 793
- US-A1- 2007 133 581
- US-A1- 2009 224 041
- US-A1- 2012 221 805

## Beschreibung

### Technisches Gebiet

Die vorliegenden Darstellungen betreffen die Speicherung von Nutzdaten im nichtflüchtigen Speicher eines Tokens zum Gegenstand und insbesondere ein Verfahren zum Speichern von Nutzdaten in einem fragmentierten Adressbereich.

### Stand der Technik

Aus dem Stand der Technik sind verschiedene Chipkartenbetriebssysteme mit einem hierarchischen Chipkartendateisystem bekannt, wie beispielsweise in der ISO/IEC 7816-4 festgelegt. Ein solches Chipkartendateisystem hat ein Wurzelverzeichnis, das auch als "Root Directory" oder "Masterfile" in Bezug genommen wird. Ferner hat ein Chipkartendateisystem Verzeichnisdateien, sogenannte "Dedicated Files", abgekürzt DFs. Eine Datendatei ist eine von einem DF abhängige Datei, welche auch als "Elementary File", abgekürzt EF bezeichnet wird. Für weitere Einzelheiten wird verwiesen auf das Handbuch der Chipkarten, Wolfgang Rankl, Wolfgang Effing, Carl Hanser Verlag München, 2008, Kapitel 12, insbesondere Kapitel 12.3 und 12.8.

Die Druckschrift DE 10 2004 022 907 A1 offenbart einen für eine objektorientierte Programmiersprache eingerichteten Datenträger mit einem Mikroprozessor, einem nicht-flüchtigen Anwendungsspeicher (EEPROM) für Programmcode enthaltende Pakete und Daten enthaltende Objekte in der objektorientierten Programmiersprache und mit einer Speicherverwaltung zum Verwalten des nicht-flüchtigen Anwendungsspeichers (EEPROM). Die Pakete sind derart als Objekte ausgelegt, dass sie gegenüber der Speicherverwaltung als Objekte erscheinen.

Die Druckschrift DE 103 01 969 A1 offenbart ein Verfahren zur Speicherdefragmentierung, das insbesondere zur Verwendung mit einem portablen Datenträger wie einer Chipkarte oder einer Smartcard vorgesehen ist. Zur Defragmentierung wird der Inhalt eines Quellbereichs in einem nicht-flüchtigen beschreibbaren Speicher derart in einen Zielbereich verschoben, dass die in dem Quellbereich enthaltenen Daten blockweise in den Zielbereich übertragen werden, die erfolgreiche Übertragung unterbrechungssicher in einem Verwaltungsdatenbereich beschrieben wird. Die Größe der übertragenen Datenblöcke wird in Abhängigkeit von dem Versatz (Offset) zwischen dem Quellbereich und dem Zielbereich derart festgelegt, dass die Blockgröße höchstens so groß wie dieser Versatz ist.

Die Druckschrift DE 600 19 364 T2 offenbart ein weiteres Verfahren zur Defragmentierung einer nichtflüchtigen Speichereinheit. Auch bei diesem Verfahren werden Datenblöcke jeweils hintereinander und schrittweise als eine Folge von Kopiervorgängen von einer ersten Position an eine zweite Position in der Speichereinheit kopiert, wobei zwischen gültigen Blöcken liegende Löcher aufgefüllt werden.

Die Druckschrift DE 10 2008 036 479 A1 offenbart einen Ansatz zur Abmilderung der Folgen des Zeitbedarfs für eine Defragmentierung in einem portablen Datenträger mit einem volatilen Speicher und einer dynamischen Speicherverwaltung eines Heap-Speicherbereichs des volatilen Speichers offenbart. Dazu wird vorgeschlagen, während einer Ausführung einer laufzeitkritischen Prozessoperation auf dem Datenträger die automatische Speicherbereinigung von der Speicherverwaltung zu deaktivieren, wodurch auf Anforderung der laufzeitkritischen Prozessoperation Freispeicher innerhalb eines die laufzeitkritische Ausführung der Prozessoperation nicht beeinträchtigenden Zeitintervalls bereitgestellt werden kann.

Die Druckschrift US 2014/0223083 A1 betrifft die Defragmentierung, d.h. ein Umsortieren, von bereits abgespeicherten Daten, bei welchem die Daten in einem nichtflüchtigen Speicher so verschoben werden, dass zusammengehörige Daten zusammengeführt werden. Genauer gesagt beschreibt sie ein Verfahren zum Defragmentieren von Daten, bei welchem bestimmen wird, ob Fragmente einer ersten Datei, die in einem nicht-flüchtigen Speicher gespeichert sind, im gleichen logischen Adressbereich angeordnet sind. Falls die Fragmente der ersten Datei in verschiedenen logischen Adressbereichen angeordnet sind, wird eine Defragmentierung ausgeführt, bei der die Fragmente der ersten Datei in einen logischen Adressraum verschoben werden, der zumindest einem der verschiedenen logischen Adressbereichen entspricht.

Die Druckschrift US 2012/0221805 A1 beschreibt ein Verfahren zum Verwalten eines physischen Speichers eines Datenspeichers, beispielsweise eines Heaps. Das Verfahren umfasst das Anfordern eines Speicherabschnitts mit einer Speicherabschnittgröße und der Identifizierung eines Pools. Der Pool ist zum Speichern von mindestens einer Zugriffsinformation vorgesehen, die eine Adresse eines Speicherblocks des Datenspeichers angibt. Der Speicherblock weist eine Speicherblockgröße auf, die gleich oder größer als die Speicherabschnittgröße ist. Das Verfahren umfasst ferner das Bestimmen, ob die Zugriffsinformation in dem Pool gespeichert ist. Wenn die Zugriffsinformationen in dem Pool gespeichert sind, werden Adressdaten des Speicherblocks zurückgegeben, wobei die Adressdaten auf den Zugriffsinformationen basieren und Zugriffsinformationen aus dem Pool entfernt werden. Wenn die Zugriffsinformationen nicht in dem Pool gespeichert sind, werden die Zugriffsinformationen erzeugt und Adressdaten des Speicherblocks werden zurückgegeben.

Die Druckschrift US 5,742,793 A beschreibt ein Computersystem mit einer CPU, die mit einem Speicher gekoppelt ist, wobei der Speicher logisch in eine Anzahl von logischen Einheiten unterteilt ist, wobei jede eine Anzahl von Speicherdatenwörtern aufweist, eine Header-Liste freier Speicherblöcke mit einer Anzahl von Headern freier Speicherblöcke, einer für jeden freien Speicherblock eines Speicher-Pools mit einer Anzahl von Speicherdatenwörtern, zum Verfolgen von freien Speicherblöcken in dem Speicherpool. Die Header-Liste freier Speicherblöcke wird verwendet und gepflegt, um die dynamische Zuweisung und Freigabe von freien und zugeteilten Speicherblöcken des Speicherpools zu steuern. Der Speicherpool ist so ausgelegt, dass er eine Speicherpoolgröße in Vielfachen der logischen Einheiten des Speichers aufweist. Alle Speicheranforderungen werden auf ein Vielfaches der Wortgröße des Speichers gerundet. Dadurch können freie und zugewiesene Speicherblöcke des Speicherpools dynamisch zugewiesen und freigegeben werden, unabhängig davon wie der Speicher adressiert wird, insbesondere, ob der Speicher virtuell oder statisch adressiert wird.

### Technisches Problem und grundlegende Lösungen

Mit den bekannten Chipkarten und diesbezüglich entwickelten Verfahren der Speicherverwaltung und/oder Organisation von Dateisystemen sind zwar Möglichkeiten zur verbesserten Freispeichernutzung durch Defragmentierung und Reorganisation des Speicherinhalts gegeben. Für die typisch verwendeten nicht-flüchtigen Speicher bedeutet dies aber Nachteile in Bezug auf die erreichbare Geschwindigkeit der Schreibvorgänge und/oder die erreichbare Lebensdauer des Speichers.

Vor diesem Hintergrund besteht ein Bedarf an verbesserten Verfahren zur Speicherverwaltung des nicht-flüchtigen Speichers von Token und an entsprechend verbesserten Token insofern, dass die vorangehend erwähnten Nachteile damit zumindest teilweise vermeidbar sind.

Die sich dementsprechend ergebende technische Aufgabe wird unter einem ersten Aspekt durch ein Verfahren zum Speichern von Nutzdaten im nicht-flüchtigen Speicher eines Tokens mit den in Anspruch 1 angegebenen Merkmalen gelöst. Unter einem zweiten Aspekt wird diese Aufgabe durch einen Token mit den in Anspruch 12 angegebenen Merkmalen gelöst. Unter einem dritten Aspekt wird diese Aufgabe durch ein Computerprogrammprodukt mit den in Anspruch 13 angegebenen Merkmalen gelöst. Weiterbildungen und Ausgestaltungen dieser grundlegenden Lösungen sind in den jeweils abhängigen Ansprüchen angegeben.

Grundlegend vorgeschlagen wird damit ein Verfahren zum Speichern von Nutzdaten im nicht-flüchtigen Speicher eines Tokens, umfassend Schritte zum Bestimmen einer zur Speicherung ausreichenden Anzahl von Fragmenten im Adressbereich des freien nicht-flüchtigen Speichers, wobei ein Fragment ein maximal-zusammenhängender Adressbereich innerhalb des freien nicht-flüchtigen Speichers darstellt, wobei weder die dem Fragment vorangehende noch die dem Fragment nachfolgende Adresse zum freien nicht-flüchtigen Speicher gehört, zum Aufteilen der Nutzdaten in Nutzdatenabschnitte und Schreiben der Nutzdatenabschnitte in die zuvor bestimmten Fragmente, zum Speichern von Metadaten, die für die beschriebenen Fragmente die Größe des darin jeweils gespeicherten Nutzdatenabschnitts angeben und eine Verweisstruktur für einen Zugriff auf die Nutzdatenabschnitte enthalten; und zum Ergänzen von Verwaltungsdaten, wodurch ein Zugriff auf die gespeicherten Metadaten vermittelt wird.

Ein möglicher Vorteil des vorangehend definierten grundlegenden Verfahrens kann darin gesehen werden, dass damit der im nicht-flüchtigen Speicher eines Tokens verfügbare freie Speicher in wesentlich weiterem Umfang genutzt werden kann als mit den bekannten Ansätzen.

In einer Ausgestaltung des vorangehend definierten Verfahrens wird in jedem Fragment in einem festen Adressoffset zu dem darin gespeicherten Nutzdatenabschnitt ein Teil der Metadaten gespeichert.

In einer weiteren, eigenständigen Ausgestaltung der vorangehend definierten Verfahren umfasst der Teil der Metadaten die Größe des in dem betreffenden Fragment gespeicherten Nutzdatenabschnitts und einen Teil der Verweisstruktur.

In einer ersten Alternative einer weiteren, eigenständigen Ausgestaltung der vorangehend definierten Verfahren wird die Größe vor und der Teil der Verweisstruktur hinter dem Nutzdatenabschnitt wird.

Ein möglicher Vorteil der vorangehend definierten Ausgestaltungen kann darin gesehen werden, dass damit eine Anpassung an einen typischen Lesevorgang erreicht wird, worin die Verweisstruktur erst nach dem Abschluss des Zugriffs auf den Nutzdatenabschnitt zum Wechsel auf das nächste Fragment benötigt wird. Insbesondere könnte damit ein Rücksprung zum Lesen am Anfang des Fragments oder eine Zwischenspeicherung der Verweisstruktur erübrigt werden.

In einer zweiten Alternative wird der Teil der Metadaten insgesamt in einem Abschnitt fester Länge vor dem jeweiligen Nutzdatenabschnitt gespeichert.

In einer weiteren, eigenständigen Ausgestaltung der vorangehend definierten Verfahren stehen die gespeicherten Metadaten in einem festen Adressoffset zu den Verwaltungsdaten.

Ein möglicher Vorteil der vorangehend definierten Ausgestaltungen kann darin gesehen werden, dass damit insbesondere in Kombination eine besonders einfache Zugriffslogik realisierbar ist.

In einer weiteren, eigenständigen Ausgestaltung der vorangehend definierten Verfahren umfassen die Metadaten eine Tabelle.

In einer weiteren, eigenständigen Ausgestaltung der vorangehend definierten Verfahren werden die gesamten Metadaten in demselben Fragment gespeichert.
In einer weiteren, eigenständigen Ausgestaltung der vorangehend definierten Verfahren bilden die gespeicherten Nutzdaten den Inhalt einer Datei in einem Chipkartendateisystem.

In einer weiteren, eigenständigen Ausgestaltung der vorangehend definierten Verfahren handelt es sich bei der Datei des Chipkartendateisystems um eine transparente Datei.

Ein möglicher Vorteil der vorangehenden Ausgestaltungen kann darin gesehen werden, dass sich damit die Möglichkeit zur Nutzung von fragmentiertem Freispeicher in Bezug auf den "gestaltlosen" Dateityp des generischen linearen Byte-Arrays ergibt.

In einer weiteren, eigenständigen Ausgestaltung der vorangehend definierten Verfahren handelt es sich bei dem Chipkartendateisystem um ein mit der Norm ISO/IEC 7816-4 konformes Dateisystem und die Verwaltungsdaten werden in den Kopfdaten einer Elementardatei geändert oder ergänzt.

Grundlegend vorgeschlagenen wird weiterhin ein Token mit einem nicht-flüchtigen Speicher, einem Mikroprozessor und programmtechnischen Einrichtungen zum Ansteuern des Mikroprozessors für die Durchführung eines vorangehend definierten Verfahrens.

Grundlegend vorgeschlagenen wird schließlich ein Computerprogrammprodukt, insbesondere ein digitales Speichermedium mit digital codierten Instruktionen, durch die ein Mikroprozessor eines Tokens mit einem nicht-flüchtigen Speicher zur Durchführung eines vorangehend definierten Verfahrens ansteuerbar ist.

### Definitionen

Der Begriff "Token" bezeichnet vorliegend jegliche Realisierung eines tragbaren Mikrocomputers mit einer externen Schnittstelle, einem Mikroprozessor und einem nicht-flüchtigen Speicher, der mittelbar über die externe Schnittstelle einer äußeren Lese- und/oder Schreiboperation zugänglich ist.

Unter einem "Token" wird hier insbesondere ein tragbares elektronisches Gerät verstanden, welches zumindest einen geschützten elektronischen Datenspeicher zur Speicherung von Daten und eine Kommunikations-Schnittstelle zum Auslesen der Daten aufweist. Der Speicherbereich ist geschützt, um zu verhindern, dass das in dem Speicherbereich gespeicherte Daten in unerlaubter Weise verändert oder ohne die dafür erforderliche Berechtigung ausgelesen wird. Mit anderen Worten kann auf den Speicherbereich nur dann zugegriffen werden, wenn eine hierzu erforderliche Zugriffberechtigung gegeben ist.

Der Token kann eine Kommunikationsschnittstelle aufweisen und einen Mikroprozessor, der über einen internen Datenbus mit dem geschützten Speicherbereich verbunden ist. Ein externer Zugriff auf den geschützten Speicherbereich über die Kommunikationsschnittstelle kann nur über den Prozessor erfolgen, nachdem der Prozessor durch Ausführung eines Programms das Vorliegen der entsprechenden Zugriffberechtigung geprüft hat.

Insbesondere kann es sich bei dem Token um einen USB-Stick, eine Chipkarte oder ein anderes Secure Element (SE), wie beispielsweise von Global Platform (www.globalplatform.org) spezifiziert, handeln oder um ein Dokument, insbesondere ein Wert- oder Sicherheitsdokument. Unter einem "Dokument" werden erfindungsgemäß papierbasierte und/oder kunststoffbasierte Dokumente verstanden, wie zum Beispiel elektronische Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Chipkarten, Zahlungsmittel, insbesondere Banknoten, Bankkarten und Kreditkarten, Frachtbriefe oder sonstige Berechtigungsnachweise wie Zugangskarten, in die ein Datenspeicher zur Speicherung von Daten integriert ist. Insbesondere kann es sich bei dem ID-Token um ein Machine-Readable Travel Document, wie beispielsweise von der Internationalen Luftfahrtbehörde (ICAO) und/oder dem Bundesamt für Sicherheit in der Informationstechnik (BSI) standardisiert, handeln.

Der Begriff "externe Schnittstelle" wird hinsichtlich eines Tokens verwendet für jede technische Einrichtung zum Austausch von digital codierten Daten zwischen dem Token und einer davon getrennten Datenverarbeitungseinrichtung. Beispiele für externe Schnittstellen eines Tokens sind die aus den Bank- und Kreditkarten bekannten Kontaktfelder und die aus den Bereich der elektronischen Ausweisdokumente bekannte RFID-Schnittstellen zur hochfrequenten drahtlosen Signalübertragung.

Unter "Verwaltungsdaten" im nicht-flüchtigen Speicher eines Tokens werden im Gegensatz zu Nutzdaten Verwaltungsdaten verstanden, die insbesondere eine Zugriffsbedingung für den Zugriff auf die Nutzdaten festlegen. Ferner können die Verwaltungsdaten auch eine Angabe der Position der betreffenden Datei in dem Chipkartendateisystem beinhalten, beispielsweise in Form eines Zeigers auf den jeweiligen Nachfolgerknoten in dem Dateibaum des Tokens, sowie z.B. einen Dateibezeichner (engl.: File Identifier, FID) und einen Applikationsbezeichner (engl.: Application Identifier, AID).

Unter "Nutzdaten" werden hier insbesondere solche Daten im nicht-flüchtigen Speicher eines Tokens verstanden, die ein mit dem Token interoperables Anwendungsprogramm eines Terminals benötigt, wie zum Beispiel biometrische Daten, insbesondere Fingerabdruckdaten, Gesichtsbiometriedaten und/oder Irisscandaten, die ein Terminal für eine biometrische Authentifizierung benötigt.

Der "Adressbereich" eines nicht-flüchtigen Speichers eines Tokens ist die Menge der Binärbezeichner, nämlich der Adressen, mit denen der Mikroprozessor des Tokens die Einheiten des nicht-flüchtigen Speichers in Zugriffsoperationen auswählt. Typisch werden die Adressen vom Mikroprozessor auf einem Register und/oder über einen Befehlsparameter gebildet. In Token ohne Speicherverwaltungseinheit (Memory Management Unit, MMU) erscheinen die Adressen direkt auf dem Datenbus. Dies ist jedoch nicht vorausgesetzt. Auch im Fall einer Virtualisierung des Speicherzugriffs durch eine Speicherverwaltungseinheit und/oder einer Verwürfelung (engl.: scrambling) der Speicherzugriffe wird vorliegend als Adressbereich die Menge der virtuellen und/oder verwürfelten Adressen verstanden, mit denen ein tatsächlich verfügbares Speicherelement auf der Stufe der Prozessorlogik für einen Zugriffsbefehl auswählbar ist.

Als "Fragment" wird ein maximal-zusammenhängender Adressbereich innerhalb des freien nicht-flüchtigen Speichers bezeichnet. Dabei bedeutet maximal zusammenhängend, dass weder die dem Fragment vorangehende noch die dem Fragment nachfolgende Adresse zum freien nicht-flüchtigen Speicher gehört.

Als "Metadaten" werden Daten im nicht-flüchtigen Speicher eines Tokens bezeichnet, mit denen Einzelheiten zur Speicherung von Nutzdaten beschreiben sind. Deshalb muss für die Speicherverwaltung eine eindeutige Verbindung zwischen Metadaten und den dadurch beschriebenen Nutzdaten herleitbar sein. Eine solche eindeutige Verbindung wird beispielsweise durch eine Datenorganisation verwirklicht, bei der die Metadaten als Header fester oder bestimmbarer Länge im logischen Adressbereich den Nutzdaten vorausgehen.

Als "Datei" wird vorliegend eine selbstbeschreibende strukturierte oder strukturierbare Zusammenstellung von Daten bezeichnet. Der zur Beschreibung der Datei dienende Teil der Daten sind Metadaten. Der darüber hinaus gehende Teil der Daten sind Nutzdaten.

Als "Verweisstruktur" wird eine strukturierte oder strukturierbare Zusammenstellung von Adressen mit Verweisen auf andere Daten bezeichnet.

Als "Zugriffslogik" wird ein abstraktes, programmtechnisch realisierbares Ordnungsschema für den Zugriff auf Daten in einem Speicher verstanden. In diesem Sinne ist eine Verweisstruktur eine besondere Zugriffslogik, nämlich eine in den gespeicherten Daten abgebildete Zugriffslogik. Andere Realisierungen einer Zugriffslogik können prozedural oder objektorientiert sein.

Als "Dateisystem" wird eine zum Zeitpunkt der Herausgabe des Tokens bereits wenigstens im Ansatz angelegte Struktur aus Verwaltungsdaten im nicht-flüchtigen Speicher angesehen. Typische Token sind zum Zeitpunkt der Herausgabe mit programmtechnischen Einrichtungen ausgestattet, die eine Erweiterung oder allgemeine Veränderung des Dateisystems unter Beibehaltung des unterliegenden abstrakten Ordnungsschemas zu späteren Zeitpunkten erlauben. Wiederum typisch werden diese programmtechnischen Einrichtungen als Teile einer hardwarespezifischen programmtechnischen Grundausrüstung bereitgestellt, die auch als Chipkartenbetriebssystem bezeichnet wird. Für weitere Einzelheiten zum Aufbau und insbesondere zur Zugriffslogik in typischen Dateisystemen für Token wird auf die Norm ISO/IEC 7816-4 verwiesen.

### Kurzbeschreibung der Figuren

Eine exemplarische Vorrichtung und exemplarische Verfahren zum Speichern von Nutzdaten im nicht-flüchtigen Speicher eines Tokens sind in den anhängenden Zeichnungen veranschaulicht. Darin zeigen:
Fig. 1 eine exemplarische Anordnung zum Speichern von digitalen Inhalten im nicht-flüchtigen Speicher eines Tokens;
Fig. 2 eine schematische Darstellung einer ersten Datenorganisation im nichtflüchtigen Speicher eines Tokens; und
Fig. 3 eine schematische Darstellung einer zweiten Datenorganisation im nichtflüchtigen Speicher eines Tokens.

### Ausführliche Beschreibung

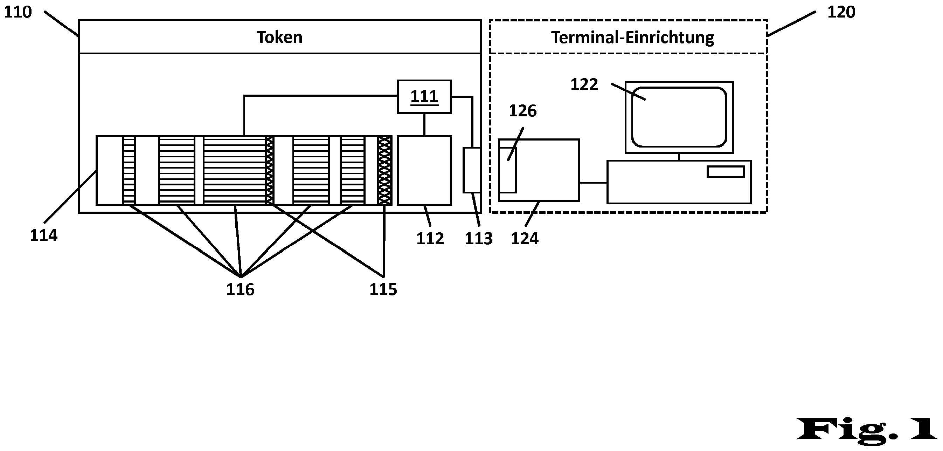

Gemäß Fig. 1 kann eine exemplarische Vorrichtung ein Token 110, beispielsweise eine Chipkarte, und eine Terminal-Einrichtung 120 umfassen.

Die Terminal-Einrichtung 120 dient in erster Linie der Vollständigkeit und wird daher vorliegend nur in den wesentlichen Aspekten dargestellt. Exemplarisch umfasst die Terminal-Einrichtung 120 einen Computer 122, bei dem es sich beispielsweise um einen Arbeitsplatzrechner handeln kann. An dem Computer 122 ist über eine geeignete Verbindung ein Lesegerät 124 angeschlossen, in dem in an sich bekannter Weise eine Schnittstelle 126 für den Datenaustausch mit dem Token 110 verwirklicht ist.

Der Token 110 verfügt über eine Schnittstelle 113, die eine zu der Schnittstelle 126 der Terminal-Einrichtung 110 hinsichtlich der unterstützten Übertragungsart und Übertragungsprotokolle kompatibel ist. Weiterhin umfasst der Token einen Mikroprozessor 111, einen Arbeitsspeicher 112 und einen nicht-flüchtigen Speicher 114. Bei dem Arbeitsspeicher 112 kann es sich um einen typisch flüchtigen Arbeitsspeicher handeln, der im Fall einer Unterbrechung der elektrischen Leistungszufuhr den bis dahin bestehenden Speicherungszustand nicht aufrechterhalten kann.
Bei dem nichtflüchtigen Speicher 114 kann es sich in an sich bekannter Weise um einen EEPROM oder FLASH Speicher handeln. Bei einem Teil des nicht-flüchtigen Speichers 114 kann es sich um einen Festspeicher (ROM) handeln. Auf diese Möglichkeit wird jedoch nicht weiter eingegangen.

Im nicht-flüchtigen Speicher 114 sind in der exemplarischen Situation Nutzdaten 116 und Metadaten 115 vorhanden. Die Metadaten können eine Verweisstruktur enthalten, die insbesondere zur Implementierung der Zugriffslogik in der Art eines typischen Chipkartendateisystems ausgestaltet sein kann. In einer derart exemplarischen Situation sind die Nutzdaten 116 in Einheiten von Dateien organisiert. Die Nutzdaten 116 in den Dateien sind für den Mikroprozessor 111 in an sich bekannter Art zugänglich über Sprungadressen in Programmmodule zur Navigation und zum Zugriff, die auf der Verweisstruktur in den Metadaten 115 operieren. Ferner können Programmmodule zum Erstellen und Löschen der Dateien und zur Veränderung der Metadaten 115 und insbesondere der Verweisstruktur vorhanden sein. Eine Änderung der Metadaten 115 in Bezug auf die Verweisstruktur kann beispielsweise eine Verschiebung einer Datei von einem Verzeichnis in ein anderes sein. Eine sonstige Änderung der Metadaten 115 kann eine Umbenennung einer Datei oder eines Verzeichnisses sein.

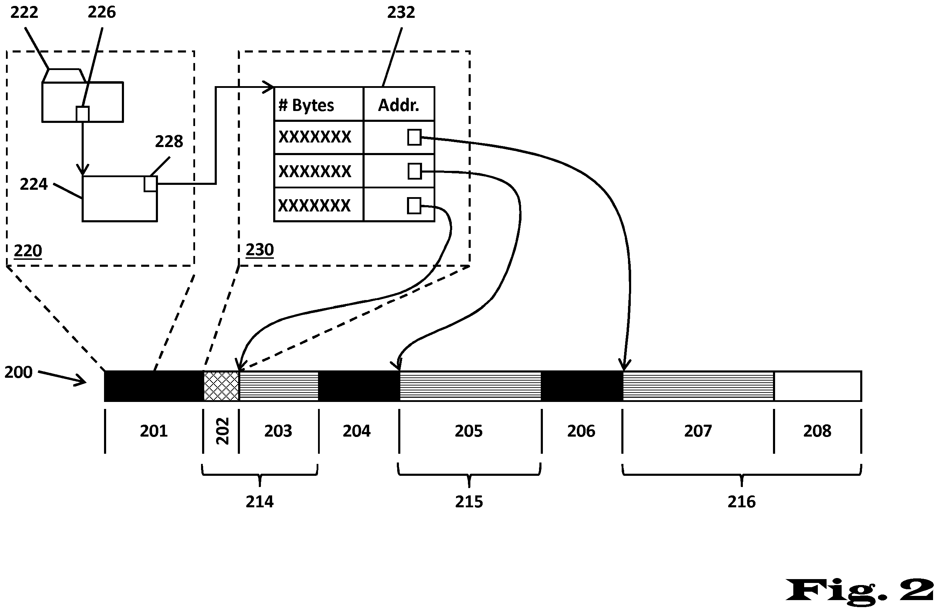

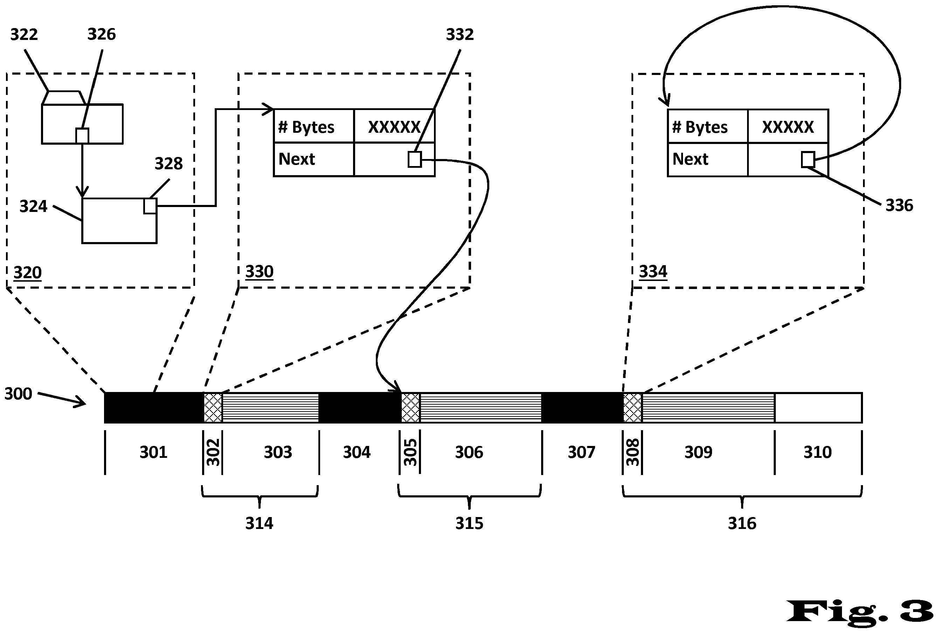

Zwei exemplarische Möglichkeiten zur Organisation der Nutzdaten, der Metadaten und insbesondere der Verweisstruktur im Adressbereich werden nachfolgend mit Bezug auf die Fig. 2 und 3 beschrieben.

Fig. 2 veranschaulicht das Ergebnis einer ersten exemplarischen Durchführungsvariante eines Verfahrens zum Speichern von Nutzdaten im nicht-flüchtigen Speicher eines Tokens. Der lineare Adressbereich 200 des nicht-flüchtigen Speichers ist durch den unten dargestellten Balken versinnbildlicht. Die darin schwarz angelegten Abschnitte 201, 204, 206 standen dem exemplarischen Verfahren nicht zur Verwendung zur Verfügung. Diese Abschnitte 201, 204, 206 können beispielsweise grundlegende Verwaltungsdaten eines Dateisystems und Daten aus früheren Speichervorgängen enthalten. Gleichermaßen könnten Teile der schwarz angelegten Abschnitte 201, 204, 206 die Adressbereiche von Gerätezugängen enthalten, die in den Speicher abgebildet sind (engl.: memory mapped) und dementsprechend nicht für die Speicherung von Daten nutzbar sind. Insbesondere wird exemplarisch angenommen, dass in dem schwarz angelegten Abschnitt 201 am Anfang des Adressbereichs 200 schon vor der Durchführung des exemplarischen Speichervorgangs Verwaltungsdaten 220 eines Dateisystems bestanden. Wiederum exemplarisch vereinfachend wird angenommen, dass das Dateisystem Verwaltungsdaten für ein Wurzelverzeichnis 222 und eine Elementardatei umfasst. Das Wurzelverzeichnis 222 ist mit dem gebräuchlichen Symbol in dem linken gestrichelten Rahmen angedeutet. Die Verwaltungsdaten 220 bezüglich der Elementardatei sind ausschließlich Verwaltungsdaten. Exemplarisch wird weiter angenommen, dass die Elementardatei vor dem Speichervorgang zwar angelegt, aber nicht beschrieben worden war. Dadurch bestanden vor dem Speichervorgang lediglich die Kopfdaten 211 (engl.: Header) der Elementardatei. Diese Kopfdaten 211 waren über den Verweis 226 in dem Wurzelverzeichnis 222 auffindbar. Der in den Kopfdaten 211 von Anfang an vorgesehene Verweis 228 auf den Dateikörper (engl.: Body) war vor dem Speichervorgang als ungültig markiert.

Die Abschnitte 202, 203, 205, 207 und 208 des Adressbereichs 200 standen zu Beginn des exemplarischen Speichervorgangs als Fragmente 214, 215, 216 des freien nicht-flüchtigen Speichers zur Verwendung zur Verfügung.

In einem ersten Schritt des exemplarischen Speichervorgangs wurden diese Fragmente 214, 215, 216 für die Speicherung der Nutzdaten ausgewählt. Die Auswahl erfolgte dabei zweckmäßig unter Berücksichtigung des Speicherbedarfs sowohl für die Nutzdaten als auch für die zugehörigen Metadaten. Beispielsweise können für die Auswahl die aus der Speicherverwaltung bekannten Heuristiken verwendet werden, die einem bestimmten Zielaspekt eine besondere Bedeutung einräumen. Ein typisches Beispiele ist der sog. "First-Fit" Ansatz, der auf eine schnellen Abschluss des Auswahlschritts zielt. Ein anderes typisches Beispiel ist der sog. "Best-Fit" Ansatz, der einen Zerfall des freien nicht-flüchtigen Speichers in kleine Fragmente vermeiden möchte. Beide Ansätze sind in der einschlägigen Literatur beschrieben und werden daher vorliegend nicht weiter erläutert.

In einem nachfolgenden Schritt des exemplarischen Speichervorgangs wurde eine Aufteilung der zu speichernden Nutzdaten in Nutzdatenabschnitte 203, 205, 207 vorgenommen und die Nutzdatenabschnitte 203, 205, 207 wurden in den ausgewählten Fragmenten 214, 215, 216 gespeichert. Die beispielhaft dargestellte Aufteilung der Nutzdaten ist dergestalt, dass die Nutzdatenabschnitte 205 und 207 die Fragmente 215 und 216 vollständig ausfüllen. Der Nutzdatenabschnitt 203 am Anfang des Adressbereichs 200 hingegen belegt das Fragment 214 nur teilweise.

Einen weiteren Teil dieses Fragments 214, nämlich den Abschnitt 202, belegen die Metadaten 230, die in einem weiteren Schritt des exemplarischen Speichervorgangs gespeichert wurden. Diese Metadaten 230 beschreiben vollständig die Größe der gespeicherten Nutzdatenabschnitte 203, 205, 207 und stellen eine Verweisstruktur für den Zugriff auf diese Nutzdatenabschnitte 203, 205, 207 zur Verfügung. Ein weiterer Teil des Fragments 208 wurde durch das exemplarische Verfahren nicht belegt und ist als freier nicht-flüchtiger Speicher anderweitig verwendbar.

Die Einzelheiten der Inhalte dieser Metadaten 230 sind in dem gestrichelten Rahmen versinnbildlicht. Das erste exemplarische Verfahren hat die Metadaten 230 in der Struktur einer Tabelle 232 angelegt, in der zeilenweise Einträge für die gespeicherten Nutzdatenabschnitte 203, 205, 207 vorhanden sind. Jede dieser Zeilen enthält in der ersten Spalte einen Eintrag für die Größe des Nutzdatenabschnitts. In der zweiten Spalte ist ferner die absolute Anfangsadresse des betreffenden Nutzdatenabschnitts angegeben. Alternativ könnte auch ein Adressoffset angegeben sein, der von einer festen Bezugsadresse ausgehend die Berechnung dieser Anfangsadresse zulässt. Eine zweckmäßige Wahl für eine solche Bezugsadresse könnte die Anfangsadresse des mit den Metadaten 230 belegten Abschnitts 202 sein. In möglichen Ausgestaltungen könnten die Metadaten 230 noch weitere Daten enthalten. Diese könnten sich auf die gespeicherten Nutzdaten insgesamt beziehen und außerhalb der Tabelle 232 angeordnet sein oder sich auf einen einzelnen Nutzdatenabschnitt beziehen und innerhalb der Tabelle 232 angeordnet sein.

In einer möglichen Realisierung des ersten exemplarischen Verfahrens kann die zweidimensionale Struktur der Tabelle 232 in an sich bekannter Weise auf den eindimensionalen linearen Adressbereich 200 des nicht-flüchtigen Speichers abgebildet sein, indem die darin enthaltenen Daten mit fest vorgegebener Feldgröße in der Ordnung von Spalten und Zeilen nacheinander angeordnet werden.

In einem abschließenden Schritt des ersten exemplarischen Verfahrens wurde die Kontrollstruktur 220 derart erweitert oder geändert, dass diese einen Verweis zum Auffinden der Metadaten 230 und insbesondere der Tabelle 232 enthält. Dazu wurde in der exemplarischen Situation in den Kopfdaten 224 der Elementardatei der Verweis 228 auf den Dateikörper mit der gültigen Anfangsadresse der Metadaten 230 belegt. Dementsprechend sind die gespeicherten Nutzdaten im Wege einer Adressauflösung über das Wurzelverzeichnis 222, die Kopfdaten 224 der Elementardatei und die Einträge in der zweiten Spalte der Tabelle 232 im Dateikörper der Elementardatei auffindbar und zugreifbar, wie dies durch die Pfeile im oberen Teil der Skizze veranschaulicht ist.

Fig. 3 veranschaulicht das Ergebnis einer zweiten exemplarischen Durchführungsvariante eines Verfahrens zum Speichern von Nutzdaten im nicht-flüchtigen Speicher eines Tokens. Wiederum ist der lineare Adressbereich durch einen Balken 300 versinnbildlicht. Gleichfalls in Übereinstimmung mit der Darstellung in Fig. 2 standen die schwarz angelegten Abschnitte 301, 304, 306 für die Speicherung in dem zweiten exemplarischen Verfahren nicht zur Verfügung. Zudem waren übereinstimmend mit der vorangehend dargestellten Situation in dem schwarz angelegten Abschnitt 301 am Anfang des Adressbereichs 300 schon vor der Durchführung des exemplarischen Speichervorgangs Verwaltungsdaten 320 eines Dateisystems vorhanden mit einem Wurzelverzeichnis 322 und einer Elementardatei, zu der vor dem Speichervorgang lediglich die Kopfdaten 324 mit einem ungültigen Verweis 328 zur Anzeige eines fehlenden Dateikörpers.

Ebenfalls in Übereinstimmung mit der vorangehenden Darstellung standen die Abschnitte 302, 303, 305, 306, 308, 309, 310 des Adressbereichs 300 dem exemplarischen Speichervorgang als Fragmente 314, 315, 316 des freien nicht-flüchtigen Speichers zur Verfügung. Außerdem soll vereinfachend angenommen werden, dass durch das zweite exemplarische Verfahren in identischer Weise wie vorangehend beschrieben diese Fragmente 314, 315, 316 für die Speicherung der Nutzdaten ausgewählt wurden.

Hingegen wurde abweichend von der vorangehend beschrieben Situation in dem zweiten exemplarischen Verfahren eine Aufteilung der Nutzdaten in Nutzdatenabschnitte 303, 306, 309 und deren Zuordnung für die Speicherung derart vorgenommen, dass keines der Fragmente 314, 315, 316 durch die Speicherung des jeweils zugeordneten Nutzdatenabschnitts 303, 306, 309 vollständig belegt ist.

Dadurch war es möglich, in einem nachfolgenden Schritt des zweiten exemplarischen Verfahrens in jedem der Fragmente 314, 315, 316 in einem verbleibenden Abschnitt 302, 305, 308 einen Teil der Metadaten zu speichern. Diese Teile sind wiederum durch eine Kreuzschraffur angedeutet. In der exemplarischen Situation wurden die Metadaten derart aufgeteilt, dass in jedem Teil 302, 305, 308 der Metadaten die Größe des im Anschluss gespeicherten Nutzdatenabschnitts 303, 306 bzw. 309 enthalten ist. Außerdem sind als Verweisstruktur im von links nach rechts betrachtet ersten und zweiten Teil 302, 305 der Metadaten jeweils Verweise auf den in der Reihenfolge der Betrachtung jeweils nächsten Teil 305 bzw. 308 der Metadaten angelegt. Dies ist in der Skizze allerdings nur für den ersten Teil 330 der Metadaten detailliert hervorgehoben, wo der betreffende Teil der Verweisstruktur als Verweis 332 angedeutet ist. Ferner ist der dritte Teil 334 der Metadaten detailliert hervorgehoben. Der dort als Teil der Verweisstruktur angedeutete Verweis 336 ist als ungültig markiert und zeigt an, dass der nachfolgende Nutzdatenabschnitt 309 den letzten Teil der Nutzdaten enthält. Die Ungültigkeit des Verweises 336 kann wie schematisch angedeutet dadurch realisiert werden, dass der Verweis 336 auf den Teil 334 der Metadaten zurückführt. Gleichermaßen kann ein ungültiger Verweis durch eine reservierte Angabe und insbesondere einen Nullwert markiert werden.

Alternativ zu der vorangehend erläuterten Anordnung des gesamten Teils der Metadaten am Anfang des jeweiligen Nutzdatenabschnitts kann auch eine Anordnung gewählt werden, in der die Daten zur Größe des Nutzdatenabschnitts diesem vorangestellt ist und der Teil der Verweisstruktur diesem nachfolgt. Dadurch kann ein Lesezugriff in einer typischen Situation vorteilhaft beeinflusst werden. Die Verweisstruktur wird typisch erst nach dem Lesen des Nutzdatenabschnitts für den Wechsel zum nächsten Fragment oder das Erkennen des Dateiendes benötigt wird. Durch die Anordnung in Leserichtung hinter dem Nutzdatenabschnitt kann eine Zwischenspeicherung der Verweisstruktur oder ein Rücksprung an den Anfang des Fragments vermieden werden.

Ferner wurde wie in der vorangehend beschriebenen exemplarischen Situation in den Kopfdaten 324 der Elementardatei der vormals ungültige Verweis 328 auf die gültige Anfangsadresse des in der vorangehend angegebenen Reihenfolge ersten Teils der Metadaten 302 geändert. Dementsprechend sind die gespeicherten Nutzdaten im Wege einer iterativen Adressauflösung über das Wurzelverzeichnis 322, die Kopfdaten der Elementardatei und die Teile der Metadaten in den Abschnitten 302, 305, 308 auffindbar und zugreifbar, wie dies durch die Pfeile im oberen Teil der Skizze veranschaulicht ist.

In beiden vorangehend beschriebenen exemplarischen Verfahren ist die Elementardatei unvollständig im Sinne der aus dem Stand der Technik bekannten und normierten einstufigen Verweisstruktur von den Kopfdaten auf den einheitlichen und zusammenhängenden Dateikörper. Das Resultat des ersten exemplarischen Verfahrens ist ein Dateikörper, der bei Anwendung einer Zugriffslogik nach dem Stand der Technik ausschließlich Metadaten enthält. Das Resultat des zweiten exemplarischen Verfahrens ist ein Dateikörper, der bei Anwendung einer Zugriffslogik nach dem Stand der Technik einen Teil der Metadaten und einen Teil der Nutzdaten enthält. In beiden Fällen ist die entstandene Verweisstruktur demnach nicht rückwärtskompatibel zur Zugriffslogik eines konventionellen Chipkartendateisystems. Dementsprechend sind die für die Operationen auf dem Dateisystem im Betriebssystem des Tokens enthaltenen Programmodule entsprechend der vorangehend aufgezeigten modifizierten Zugriffslogik anzupassen.

In einer weiteren Ausgestaltung besteht die Möglichkeit, die Fragmente des freien, nicht-flüchtigen Speichers in einer sozusagen "unechten" Datei des Dateisystems zusammen zu fassen, die in identischer Weise wie die unter diesem Blickwinkel "echten", vorangehend beschriebenen Dateien organisiert und zugreifbar ist. Dadurch könnte die Möglichkeit, geschaffen werden, beim Löschen von "echten" Dateien davon vormals belegte Abschnitte des Adressbereichs mit unmittelbar angrenzenden der "unechten" Datei zusammen zu fassen, um dadurch die Fragmentierung des Adressbereichs zu verringern.

### Bezugszeichenliste

- 110: Token
- 111: Mikroprozessor
- 112: Arbeitsspeicher
- 113: Externe Schnittstelle
- 114: Nicht-flüchtiger Speicher
- 115: Metadaten
- 116: Nutzdaten
- 120: Terminal-Einrichtung
- 122: Computer
- 124: Lesegerät
- 126: Schnittstelle
- 200: Adressbereich
- 201-208: Abschnitte
- 214-216: Fragmente
- 220: Verwaltungsdaten
- 222: Wurzelverzeichnis
- 224: Kopfdaten einer Elementardatei
- 226,228: Verweise
- 230: Metadaten
- 232: Tabelle
- 300: Adressbereich
- 301-310: Abschnitte
- 314-316: Fragmente
- 320: Verwaltungsdaten
- 322: Wurzelverzeichnis
- 324: Elementardatei
- 326,328: Verweise
- 330,334: Metadaten
- 332, 336: Verweisstruktur

## Patentansprüche

1. Verfahren zum Speichern von Nutzdaten (116) im nicht-flüchtigen Speicher (114) eines Tokens (110), umfassend:
- Bestimmen einer zur Speicherung ausreichenden Anzahl von Fragmenten (214, 215, 216; 314, 315, 316) im Adressbereich (200, 300) des freien nicht-flüchtigen Speichers (114), wobei ein Fragment (214, 215, 216; 314, 315, 316) ein maximal-zusammenhängender Adressbereich innerhalb des freien nicht-flüchtigen Speichers (114) darstellt, wobei weder die dem Fragment (214, 215, 216; 314, 315, 316) vorangehende noch die dem Fragment (214, 215, 216; 314, 315, 316) nachfolgende Adresse zum freien nicht-flüchtigen Speicher (114) gehört;
- Aufteilen der Nutzdaten (116) in Nutzdatenabschnitte (203, 205, 207; 303, 306, 309) und Schreiben der Nutzdatenabschnitte (203, 205, 207; 303, 306, 309) in die zuvor bestimmten Fragmente (214, 215, 216; 314, 315, 316); **gekennzeichnet durch** :
- Speichern von Metadaten (230; 330, 334), die für die beschriebenen Fragmente (214, 215, 216; 314, 315, 316) die Größe des darin jeweils gespeicherten Nutzdatenabschnitts (203, 205, 207; 303, 306, 309) angeben und eine Verweisstruktur (232; 332) für einen Zugriff auf die Nutzdatenabschnitte (203, 205, 207; 303, 306, 309) enthalten; und
- Ergänzen von Verwaltungsdaten (228; 328), wodurch ein Zugriff auf die gespeicherten Metadaten (230; 330, 334) vermittelt wird.

2. Verfahren nach Anspruch 1, worin in jedem Fragment (314, 315, 316) in einem festen Adressoffset zu dem darin gespeicherten Nutzdatenabschnitt (303, 306, 309) ein Teil der Metadaten (302, 305, 308) gespeichert wird.

3. Verfahren nach Anspruch 2, worin der Teil der Metadaten die Größe des in dem betreffenden Fragment (314, 315, 316) gespeicherten Nutzdatenabschnitts (303, 306, 309) und einen Teil der Verweisstruktur (332, 338) umfasst.

4. Verfahren nach Anspruch 3, worin die Größe vor und der Teil der Verweisstruktur hinter dem Nutzdatenabschnitt gespeichert wird.

5. Verfahren nach Anspruch 2 oder 3, worin der Teil der Metadaten (330, 334) jeweils in einem Abschnitt (302, 305, 308) fester Länge vor dem Nutzdatenabschnitt (303, 306, 309) gespeichert wird.

6. Verfahren nach einem der vorangehenden Ansprüche, worin die gespeicherten Metadaten in einem festen Adressoffset zu den Verwaltungsdaten stehen.

7. Verfahren nach einem der vorangehenden Ansprüche, worin die Metadaten (230) eine Tabelle (232) umfassen.

8. Verfahren nach einem der vorangehenden Ansprüche, worin die gesamten Metadaten (230) in einem Fragment (214) gespeichert werden.

9. Verfahren nach einem der vorangehenden Ansprüche, worin die gespeicherten Nutzdaten (116) den Inhalt einer Datei in einem Chipkartendateisystem bilden.

10. Verfahren nach Anspruch 9, worin es sich bei der Datei des Chipkartendateisystems um eine transparente Datei handelt.

11. Verfahren nach Anspruch 10, worin es sich bei dem Chipkartendateisystem um ein mit der Norm ISO/IEC 7816-4 konformes Chipkartendateisystem handelt und die Verwaltungsdaten (228; 328) in den Kopfdaten (224; 324) einer Elementardatei geändert oder ergänzt werden.

12. Token (110) und programmtechnischen Einrichtungen zum Ansteuern des Mikroprozessors (111) für die Durchführung eines Verfahrens nach einem der vorangehenden Ansprüche.

13. Computerprogrammprodukt, insbesondere digitales Speichermedium mit digital codierten Instruktionen, durch die ein Mikroprozessor (111) eines Tokens des Anspruchs 12 (110) zur Durchführung eines Verfahrens nach einem der Ansprüche 1 bis 11 ansteuerbar ist.

## Claims

1. A method for storing user data (116) in the non-volatile memory (114) of a token (110), comprising the following steps:
- determining a sufficient number of fragments (214, 215, 216; 314, 315, 316) in the address range (200, 300) of the free non-volatile memory (114) that are to be stored, with a fragment (214, 215, 216; 314, 315, 316) representing a maximally continuous address range within the free non-volatile memory (114), with neither the address preceding the fragment (214, 215, 216; 314, 315, 316) nor the address following the fragment (214, 215, 216; 314, 315, 316) belonging to the free non-volatile memory (114);
- dividing the user data (116) into user data sections (203, 205, 207; 303, 306, 309) and writing the user data sections (203, 205, 207; 303, 306, 309) into the previously determined fragments (214, 215, 216; 314, 315, 316); **characterised by**:
- storing metadata (230; 330, 334) which provide, for the described fragments (214, 215, 216; 314, 315, 316), the size of the user data section (203, 205, 207; 303, 306, 309) stored therein, and which contain a reference structure (232; 332) for an access to the user data sections (203, 205, 207; 303, 306, 309); and
- adding management data (228; 328), thereby facilitating an access to the stored metadata (230; 330, 334).

2. The method according to claim 1, wherein in each fragment (314, 315, 316) a part of the metadata (302, 305, 308) is stored in a fixed address offset in relation to the user data section (303, 306, 309) stored therein.

3. The method according to claim 2, wherein the part of the metadata comprises the size of the user data section (303, 306, 309) stored in the relevant fragment (314, 315, 316) and a part of the reference structure (332, 338).

4. The method according to claim 3, wherein the size is stored before the user data section and the part of the reference structure is stored after the user data section.

5. The method according to claim 2 or 3, wherein the part of the metadata (330, 334) is stored in each case in a section (302, 305, 308) of fixed length before the user data section (303, 306, 309).

6. The method according to one of the preceding claims, wherein the stored metadata are in a fixed address offset in relation to the management data.

7. The method according to one of the preceding claims, wherein the metadata (230) comprise a table (232).

8. The method according to one of the preceding claims, wherein the entire metadata (230) are stored in a fragment (214).

9. The method according to one of the preceding claims, wherein the stored user data (116) form the content of a file in a chip card file system.

10. The method according to claim 9, wherein the file of the chip card file system is a transparent file.

11. The method according to claim 10, wherein the chip card file system is a chip card file system conforming to ISO/IEC standard 7816-4 and the management data (228; 328) in the head data (224; 324) of an elementary file are modified or supplemented.

12. A token (110) and program devices for controlling the microprocessor (111) for carrying out a method according to one of the preceding claims.

13. A computer program product, in particular a digital storage medium with digitally coded instructions, by means of which a microprocessor (111) of a token according to claim 12 can be controlled to carry out a method according to one of claims 1 to 11.

## Revendications

1. Procédé d'enregistrement de données d'utilisation (116) dans la mémoire (114) non volatile d'un jeton (110) comprenant :
- la détermination d'un nombre de fragments (214, 215, 216 ; 314, 315, 316) suffisamment grand pour l'enregistrement dans la zone d'adresse (200, 300) de la mémoire (114) non volatile libre, où un fragment (214, 215, 216 ; 314, 315, 316) représente une zone d'adresse de cohérence maximale dans la mémoire (114) non volatile libre, où, ni l'adresse précédant le fragment (214, 215, 216 ; 314, 315, 316), ni l'adresse suivant le fragment (214, 215, 216 ; 314, 315, 316) font partie de la mémoire (114) non volatile libre ;
- la subdivision des données d'utilisation (116) en segments de données d'utilisation (203, 205, 207 ; 303, 306, 309) et l'écriture des segments de données d'utilisation (203, 205, 207 ; 303,306, 309) dans les fragments (214, 215, 216 ; 314, 315,316) déterminés auparavant ; **caractérisé par** :
- l'enregistrement de métadonnées (230 ; 330, 334) qui indiquent, pour les fragments (214, 215, 216 ; 314, 315, 316), la taille du segment de données d'utilisation (203,205, 207 ; 303,306, 309) y étant respectivement stockées et qui contiennent une structure de répertoire (232 ; 332) pour un accès aux segments de données d'utilisation (203, 205, 207 ; 303, 306, 309) ; et
- le fait de compléter des données de gestion (228 ; 328), ce par quoi un accès aux métadonnées (230 ; 330, 334) stockées est facilité.

2. Procédé selon la revendication 1, dans lequel, dans chaque fragment (314, 315, 316), une partie des métadonnées (302, 6305, 308) est stockée dans un décalage d'adresse fixe avec le segment de données d'utilisation y étant enregistré.

3. Procédé selon la revendication 2, dans lequel une partie des métadonnées comprend la taille du segment de données d'utilisation (303, 306, 309) enregistré dans le fragment (314, 315, 316) concerné et une partie de la structure de répertoire (332, 338).

4. Procédé selon la revendication 3, dans lequel la taille et la partie de structure de répertoire sont enregistrées derrière le segment de données d'utilisation.

5. Procédé selon la revendication 2 ou la revendication 3, dans lequel la partie des métadonnées (330, 334) est enregistrée respectivement dans un segment (302, 305, 308) de taille fixe avant le segment de données d'utilisation (303, 306, 309).

6. Procédé selon l'une des revendications précédentes, dans lequel les métadonnées stockées sont répertoriées dans un décalage d'adresse fixe par rapport aux données de gestion.

7. Procédé selon l'une des revendications précédentes, dans lequel les métadonnées (230) comprennent un tableau (232).

8. Procédé selon l'une des revendications précédentes, dans lequel toutes les métadonnées (230) sont enregistrées dans un fragment (214).

9. Procédé selon l'une des revendications précédentes, dans lequel les données d'utilisation (116) enregistrées forment le contenu d'un fichier dans un système de fichiers de carte à puce.

10. Procédé selon la revendication 9, dans lequel, dans le cas du fichier du système de fichiers de carte à puce, il s'agit d'un fichier transparent.

11. Procédé selon la revendication 10, dans lequel, dans le cas du système de fichiers de carte à puce, il s'agit d'un système de fichiers de carte à puce conforme à la norme ISO/IEC 7816-4 et les données de gestion (228 ; 328) dans les données de tête (224 ; 324) d'un fichier élémentaire sont modifiées ou complétées.

12. Jeton (110) et installations de programmation permettant la mise en œuvre du microprocesseur (111) pour l'exécution d'un procédé selon l'une des revendications précédentes.

13. Produit-programme informatique, notamment support de stockage numérique, doté d'instructions codées de manière numérique par lesquelles un microprocesseur (111) d'un jeton selon la revendication 12 peut être mis en œuvre pour l'exécution d'un procédé selon l'une des revendications 1 à 11.
